# EUROPEAN PATENT SPECIFICATION

(11) **EP 4 395 143 B1**
(45) Date of publication and mention of the grant of the patent: **01.07.2026**
(21) Application number: 21953882.4
(22) Date of filing: 01.09.2021
(51) Int. Cl.: H02K 37/24, H02K 7/116, F16H 1/28, F16H 57/00

(54) **TRANSMISSION MECHANISM OF STEPPING MOTOR, STEPPING MOTOR, AND DRIVING MECHANISM**
GETRIEBEMECHANISMUS FÜR EINEN SCHRITTMOTOR, SCHRITTMOTOR UND ANTRIEBSMECHANISMUS
MÉCANISME DE TRANSMISSION D'UN MOTEUR PAS À PAS, MOTEUR PAS À PAS ET MÉCANISME D'ENTRAÎNEMENT

(30) Priority: 16.08.2021 CN 202121919557 U
(43) Date of publication of application: 03.07.2024
(73) Proprietor: Jiangmen Jinlong High Technology Industrial Co., Ltd., Jiangmen, Guangdong 529000 (CN)
(72) Inventor: LIAO, Jinsheng, Jiangmen, Guangdong 529000 (CN); LU, Huanjiu, Jiangmen, Guangdong 529000 (CN)
(74) Representative: Noréns Patentbyrå AB
(86) International application number: PCT/CN2021/115950
(87) International publication number: WO 2023/019645

(56) References cited:
- CN-A- 107 666 208
- CN-A- 107 749 695
- CN-A- 112 600 382
- CN-U- 208 078 818
- CN-U- 209 794 127
- CN-U- 210 693 742
- CN-U- 213 693 426
- CN-U- 213 693 426
- CN-U- 213 711 790
- CN-U- 213 711 790
- JP-A- 2019 066 023
- KR-A- 20100 132 808
- US-A- 5 820 504

## Description

### TECHNICAL FIELD

The present invention relates to the field of a motor, and in particular to a transmission mechanism of stepping motor, a stepping motor and a driving mechanism.

### BACKGROUND

As a power source of an electrical appliance and various machines, motor is widely used in various occasions. The motor may be divided into various types according to the type of a working power supply, its structure and working principle, starting and operation mode, rotor mechanism and application, etc.

Among them, the stepping motor is an electric motor that converts an electric pulse signal into corresponding angular displacement or linear displacement. Each input pulse causes the rotor to rotate a certain angle or move forward a step, with its output angular or linear displacement being directly proportional to the number of input pulses, and the rotation speed proportional to the pulse frequency. Due to its low cost and precise control, the stepper motor is one of the most commonly used motors.

Compared with a servo motor, an output torque of the stepping motor is smaller. Under a certain application condition, when it is necessary to increase the torque of the stepping motor to prevent slipping, issues such as broken teeth on the output gear or the output shaft becoming dislodged may occur.

CN210693742U discloses a stepper motor and a monitoring device using the same, designed to reduce the wear rate of the motor bracket and minimize the probability of output shaft misalignment.

The transmission mechanism of this document discloses an input shaft, an output shaft provided with a plurality of grooves, wherein the plurality of grooves are evenly distributed on a circumferential surface of the output shaft, an output gear installed on the output shaft, wherein the output gear is provided with bumps, and the bumps are matched with the respective grooves, and a plurality of transmission gear sets for transmitting a power, wherein the plurality of transmission gear sets are connected to the input shaft and the output gear.

US5820504A discloses a trochoidal tooth form gear assemblies. A differing number of teeth between the meshed external and internal gear teeth provides gear reduction of rotational speeds through axially aligned input and output shafts.

CN213693426U discloses a stepper motor gearbox, in which the gear set includes a driving gear, a first planetary gear, a second planetary gear, a third planetary gear, and an output gear shaft. The motor's output shaft is connected to the driving gear and drives its rotation, which in turn drives the first planetary gear, second planetary gear, third planetary gear, and output gear shaft to rotate.

### SUMMARY

The present invention aims at solving at least one of the technical problems in the existing technology. Therefore, the present invention provides a transmission mechanism of stepping motor disclosing the features of claim 1. By optimizing an output shaft and an output gear of the transmission mechanism, the engagement thereof is more reliable in the transmission process, which can prevent the issues such as broken teeth or the output shaft becoming dislodged, so that the stepping motor becomes stable and durable.

The present disclosure further proposes a stepping motor having the transmission mechanism of stepping motor and a driving mechanism having the stepping motor.

The invention is set out in the appended set of claims.

The transmission mechanism of stepping motor according to the embodiment of the present invention has at least the following beneficial effects. Engagement of the output shaft and the output gear is more reliable in the transmission process through the matching of the grooves and the bumps, which can prevent the issues such as broken teeth or the output shaft becoming dislodged, so that the stepping motor becomes stable and durable.

In the transmission mechanism of stepping motor according to the embodiment of the present invention, the bumps are arc-shaped bumps and the grooves are arc-shaped grooves. The arrangement of the arc-shaped bumps and the arc-shaped grooves enables the engagement and disengagement between the output shaft and the output gear to be easier.

In the transmission mechanism of stepping motor according to the embodiment of the present invention, five bumps are provided, and the five bumps are evenly distributed along a circumferential direction of the output gear, which enables the engagement between the output shaft and the output gear to be more stable.

In the transmission mechanism of stepping motor according to the embodiment of the present invention, three transmission gear sets are provided, the three transmission gear sets are arranged along a circumferential direction of the input shaft, the three transmission gear sets are respectively a first transmission gear set, a second transmission gear set and a third transmission gear set which are meshed in sequence, the first transmission gear set is connected to the input shaft, and the output gear is connected to the third transmission gear set. The first transmission gear set, the second transmission gear set and the third transmission gear set are arranged along the circumferential direction of the input shaft, so that the structure is more compact and an overall size of the stepping motor is effectively reduced.

In the transmission mechanism of stepping motor according to the embodiment of the present invention, one end of the input shaft is provided with tooth spaces, the first transmission gear set comprises a first transmission shaft, a first driven gear and a first driving gear, the second transmission gear set comprises a second transmission shaft, a second driven gear and a second driving gear, the third transmission gear set comprises a third transmission shaft, a third driven gear and a third driving gear, the first driving gear and the first driven gear are fixedly installed on the first transmission shaft, the second driving gear and the second driven gear are fixedly installed on the second transmission shaft, the third driving gear and the third driven gear are fixedly installed on the third transmission shaft, the first driven gear is meshed with the input shaft through the tooth spaces, the second driven gear is meshed with the first driving gear, the third driven gear is meshed with the second driving gear, and the output gear is meshed with the third driving gear. The tooth spaces are integrated with the input shaft, which is convenient for direct use, without needing to install another gear on the input shaft.

In the transmission mechanism of stepping motor according to the embodiment of the present invention, an outer diameter of the first driven gear is greater than an outer diameter of the input shaft, an outer diameter of the second driven gear is greater than an outer diameter of the first driving gear, an outer diameter of the third driven gear is greater than an outer diameter of the second driving gear, and an outer diameter of the output gear is greater than an outer diameter of the third driving gear, which can reduce an input rotation speed and increase an output torque.

In the transmission mechanism of stepping motor according to the embodiment of the present invention, a thickness of each of the tooth spaces is greater than a thickness of the first driven gear, a thickness of the first driving gear is greater than a thickness of the second driven gear, a thickness of the second driving gear is greater than a thickness of the third driven gear, and a thickness of the third driving gear is greater than a thickness of the output gear, so that meshing transmission can be better performed between the gears.

According to an embodiment of the present invention, a stepping motor comprises the transmission mechanism of stepping motor according to the embodiment in the first aspect of the present disclosure.

The stepping motor according to the of the present invention has at least the following beneficial effects. Engagement of the output shaft and the output gear are more reliable in the transmission process, which can prevent the issues such as broken teeth or the output shaft becoming dislodged, so that the operation becomes more stable.

According to an embodiment of the present invention, a driving mechanism comprises the stepping motor according to the embodiment in the second aspect of the present disclosure; and a connecting piece connected to the output shaft to transmit the power of the motor.

The driving mechanism according to the embodiment of the present invention has at least the following beneficial effects. Engagement of the output shaft and the output gear are more reliable in the transmission process, which can prevent the issues such as broken teeth or the output shaft becoming dislodged in the use of the stepping motor connected by the connecting piece, so that the operation becomes more stable.

In the driving mechanism according to the embodiment of the present invention, the connecting piece is one of a coupling, a rotating rod, or a gear. The stepping motor can be widely used, and the coupling facilitates driving of the stepping motor in a direct connection mode. Moreover, because the stepping motor will increase its the torque accordingly after decelerating through the transmission gear set, the stepping motor is also suitable for directly applying the driving mechanism of the rotating rod or the gear.

The additional aspects and advantages of the present invention will be partially given in the following description, and will be partially apparent from the following description, or will be understood via the practice of the application.

### BRIEF DESCRIPTION OF THE DRAWINGS

The above and/or additional aspects and advantages of the application will be more apparent from the following description of the embodiments in conjunction with the accompanying drawings, wherein:
FIG. 1 is a schematic structural diagram of a transmission mechanism of stepping motor according to a first embodiment of the present invention;
FIG. 2 is a schematic diagram of an output shaft and an output gear of the transmission mechanism of stepping motor according to the first embodiment of the present invention;
FIG. 3 is a schematic diagram of a stepping motor according to a second embodiment of the present invention;
FIG. 4 is a first schematic structural diagram of a driving mechanism according to a third embodiment of the present invention;
FIG. 5 is a second schematic structural diagram of the driving mechanism according to the third embodiment of the present invention; and
FIG. 6 is a third schematic structural diagram of the driving mechanism according to the third embodiment of the present invention.

Reference Numerals: 100 refers to output shaft, 110 refers to groove, 200 refers to output gear, and 210 refers to bump;
300 refers to input shaft, and 310 refers to tooth space;
410 refers to first transmission gear set, 411 refers to first transmission shaft, and 412 refers to first driven gear;
420 refers to second transmission gear set, 421 refers to second transmission shaft, 422 refers to second driven gear, and 423 refers to second driving gear;
430 refers to third transmission gear set, 431 refers to third transmission shaft, 432 refers to third driven gear, and 433 refers to third driving gear; and
500 refers to coupling, 510 refers to first power shaft, 600 refers to rotating rod, 610 refers to connecting rod, 611 refers to second power shaft, 700 refers to first rotation gear, 710 refers to second rotation gear, and 711 refers to third power shaft.

### DETAILED DESCRIPTION

The embodiments of the present invention will be described in detail hereinafter. Examples of the embodiments are shown in the accompanying drawings. The same or similar reference numerals throughout the drawings denote the same or similar elements or elements having the same or similar functions. The embodiments described below with reference to the accompanying drawings are exemplary and are only intended to explain the present invention, but should not be construed as limiting the present invention.

In the description of the present invention, it should be understood that the orientation or position relation related to the orientation description, such as the orientation or position relation indicated by the terms upper, lower, front, rear, left, right, etc., is based on the orientation or position relation shown in the drawings, which is only used for convenience of description of the present disclosure and simplification of description, instead of indicating or implying that the indicated device or element must have a specific orientation, and be constructed and operated in a specific orientation, and thus shall not be understood as a limitation to the present disclosure.

In the description of the present invention, several means one or more, "a plurality of" means two or more; greater than, less than and exceeding are understood as excluding the following number, and above, below and within are understood as including the following number. If first and second are described, the descriptions are used for the purpose of distinguishing the technical features only, and cannot be understood as indicating or implying relative importance, or implicitly indicating the number of technical features indicated thereby, or implicitly indicating the order of technical features indicated thereby.

In the description of the application, unless otherwise clearly defined, words such as setting, installation, connection, and the like, shall be understood broadly, and those having ordinary skills in the art can reasonably determine the specific meanings of the above words in the application in combination with the specific contents of the technical solution.

### Embodiment 1:

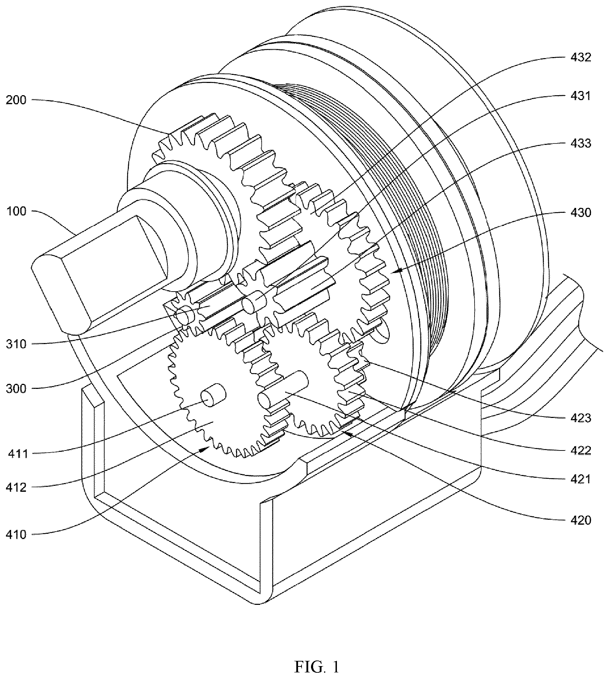

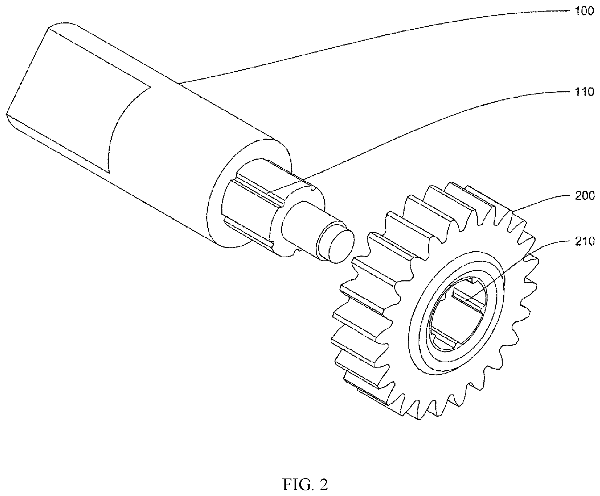

As shown in FIG. 1 and FIG. 2, according to Embodiment 1 of the present invention, a transmission mechanism of a stepping motor comprises an input shaft 300, an output shaft 100, an output gear 200 and a plurality of transmission gear sets. The output shaft 100 is provided with a plurality of grooves 110, the plurality of grooves 110 are evenly distributed on a circumferential surface of the output shaft 100. The output gear 200 is installed on the output shaft 100, the output gear 200 is provided with a plurality of bumps 210, and the bumps 210 are matched with the respective grooves 110. The plurality of transmission gear sets are used for transmitting a power, and the plurality of transmission gear sets are connected to the input shaft 300 and the output gear 200.

Referring to FIG. 2, in the embodiment of the present invention, the bumps 210 arranged on the output gear 200 are arc-shaped bumps 210, and the grooves 110 arranged on the output shaft 100 are arc-shaped grooves 110 correspondingly. Furthermore, five bumps 210 are provided, and the five bumps 210 are evenly distributed along a circumferential direction of the output gear 200, and correspondingly, five grooves 110 are also provided and distributed along a circumferential direction of the output shaft 100.

Referring to FIG. 1, in the embodiment of the present invention, three transmission gear sets are provided, the three transmission gear sets are arranged along a circumferential direction of the input shaft 300, so that the structure is more compact and an overall size of the stepping motor is effectively reduced. To be specific, the three transmission gear sets are respectively a first transmission gear set 410, a second transmission gear set 420 and a third transmission gear set 430 which are meshed in sequence, the first transmission gear set 410 is connected to the input shaft 300, and the output gear 200 is connected to the third transmission gear set 430.

One end of the input shaft 300 is provided with tooth spaces 310, the tooth spaces 310 are integrated with the input shaft 300, which is convenient for direct use. The first transmission gear set 410 comprises a first transmission shaft 411, a first driven gear 412 and a first driving gear (not shown). The second transmission gear set 420 comprises a second transmission shaft 421, a second driven gear 422 and a second driving gear 423. The third transmission gear set 430 comprises a third transmission shaft 431, a third driven gear 432 and a third driving gear 433. To be specific, the first driving gear and the first driven gear 412 are fixedly installed on the first transmission shaft 411, the second driving gear 423 and the second driven gear 422 are fixedly installed on the second transmission shaft 421, and the third driving gear 433 and the third driven gear 432 are fixedly installed on the third transmission shaft 431. The first driven gear 412 is meshed with the input shaft 300 through the tooth spaces 310, the second driven gear 422 is meshed with the first driving gear, the third driven gear 432 is meshed with the second driving gear 423, and the output gear 200 is meshed with the third driving gear 433. Finally, the power of the stepping motor is transmitted to the output gear 200 from the input shaft 300.

Referring to FIG. 1, in some embodiments, an outer diameter of the first driven gear 412 is greater than an outer diameter of the input shaft 300, an outer diameter of the second driven gear 422 is greater than an outer diameter of the first driving gear, an outer diameter of the third driven gear 432 is greater than an outer diameter of the second driving gear 423, and an outer diameter of the output gear 200 is greater than an outer diameter of the third driving gear 433, which forms a decelerating transmission mechanism, and finally increases the output torque of the output shaft 100. In some embodiments, a thickness of each of the tooth spaces 310 is greater than a thickness of the first driven gear 412, a thickness of the first driving gear is greater than a thickness of the second driven gear 422, a thickness of the second driving gear 423 is greater than a thickness of the third driven gear 432, and a thickness of the third driving gear 433 is greater than a thickness of the output gear 200, so that meshing transmission is better performed between the gears.

### Embodiment 2:

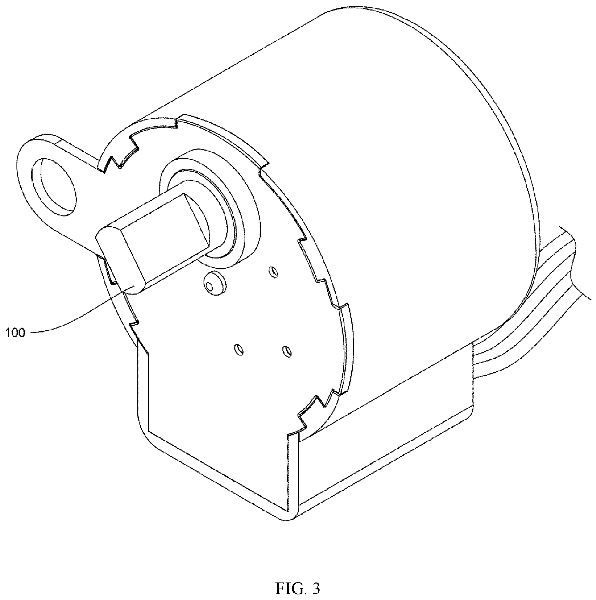

As shown in FIG. 3, according to Embodiment 2 of the present invention, a stepping motor comprises the transmission mechanism of a stepping motor according to Embodiment 1 of the present invention.

In the stepping motor according to the embodiment of the present invention, by adopting the transmission mechanism of stepping motor, engagement of the output shaft 100 with the output gear 200 in the transmission process is more reliable, which can prevent the issues such as broken teeth or the output shaft becoming dislodged. Meanwhile, the output torque of the stepping motor will increase, and the operation is more stable.

In some embodiments, the output end of the output shaft 100 is provided with a flat groove, a threaded hole or a key groove (not shown), which is convenient for the assembly and use of the output shaft 100 and other parts.

Other configurations and operations of the stepping motor according to the embodiment of the present invention are known to those having ordinary skills in the art, and will not be described in detail herein.

### Embodiment 3:

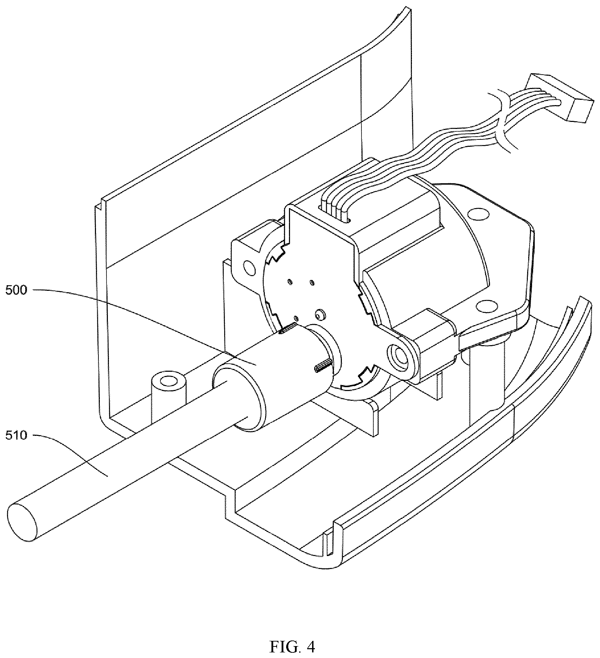

As shown in FIG. 4 to FIG. 6, according to Embodiment 3 of the present invention, a driving mechanism comprises the stepping motor in Embodiment 2 of the present invention; and a connecting piece connected to the output shaft 100 to transmit the power of the motor.

In the driving mechanism according to Embodiment 3 of the present invention, by adopting the stepping motor, engagement of the output shaft 100 with the output gear 200 in the transmission process is more reliable, which can prevent the issues such as broken teeth or the output shaft becoming dislodged in the use of the stepping motor connected by the connecting piece, so that the operation becomes more stable.

In some embodiments, referring to FIG. 4, the output shaft 100 and the first power shaft 510 are directly connected through a coupling 500, and axes of the output shaft 100 and the first power shaft 510 are coincided with each other. Driven by the stepping motor, the first power shaft 510 rotates synchronously with the output shaft 100.

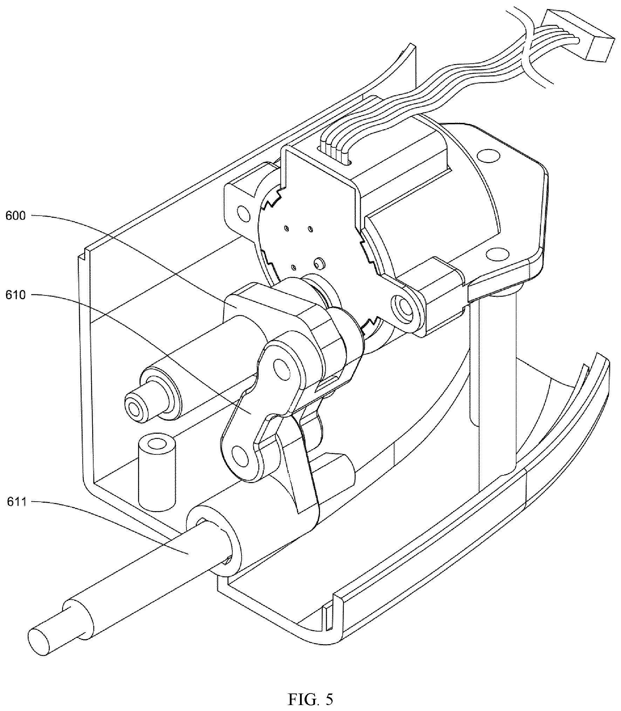

In some embodiments, referring to FIG. 5, the output shaft 100 is fixedly connected with a rotating rod 600, and a connecting rod 610 is arranged between the rotating rod 600 and the second power shaft 611. One end of the connecting rod 610 is rotatably connected with the rotating rod 600, and the other end of the connecting rod 610 is rotatably connected with the second power shaft 611 relatively to form a linkage mechanism. Driven by the stepping motor, the second power shaft 611 swings.

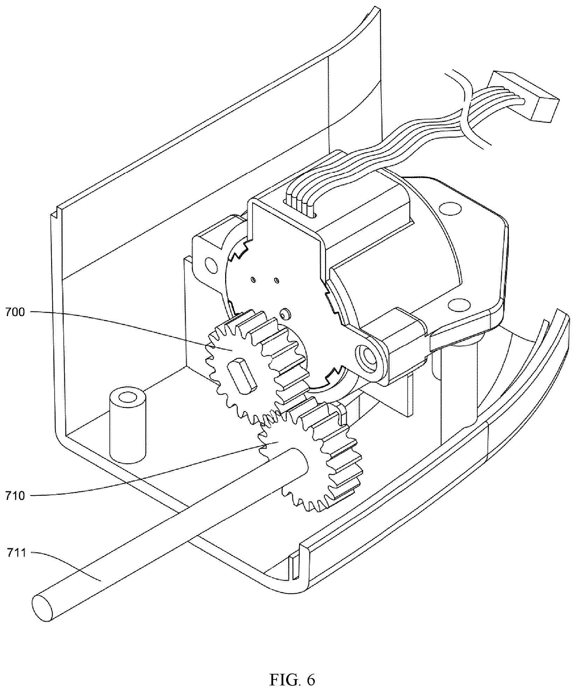

In some embodiments, referring to FIG. 6, the output shaft 100 is fixedly connected with a first rotating gear 700, a third power shaft 711 is fixedly connected with a second rotating gear 710, and the first rotation gear 700 is meshed with the second rotation gear to form a gear transmission mechanism. Driven by the stepping motor, the third power shaft 711 rotates.

It can be understood that after the stepping motor decelerates through the transmission gear set, the torque will increase accordingly, so as to be better used in various occasions. For example, it can achieve excellent driving effects by direct connection and driving through the coupling 500; connection and driving through the linkage mechanism, or connection and driving through gear meshing.

Other configurations and operations of the stepping motor according to the embodiment of the present invention are known to those having ordinary skills in the art, and will not be described in detail herein.

## Claims

1. A transmission mechanism of stepping motor, comprising:
an input shaft (300);
an output shaft (100) provided with a plurality of grooves (110), wherein the grooves (110) are arc-shaped grooves (110) and the plurality of grooves (110) are evenly distributed on a circumferential surface of the output shaft (100);
an output gear (200) installed on the output shaft (100), wherein the output gear (200) is provided with five bumps (210) evenly distributed along a circumferential direction of the output gear (200), and wherein the bumps (210) are arc-shaped bumps (210) and the bumps (210) are matched with the respective grooves (110);
wherein three transmission gear sets are provided, the three transmission gear sets are arranged along a circumferential direction of the input shaft (300), the three transmission gear sets are respectively a first transmission gear set (410), a second transmission gear set (420) and a third transmission gear set (430) which are meshed in sequence, the first transmission gear set (410) is connected to the input shaft (300), and the output gear (200) is connected to the third transmission gear set (430);
wherein one end of the input shaft (300) is provided with tooth spaces (310), the first transmission gear set (410) comprises a first transmission shaft (411), a first driven gear (412) and a first driving gear, the second transmission gear set (420) comprises a second transmission shaft (421), a second driven gear (422) and a second driving gear (423), the third transmission gear set (430) comprises a third transmission shaft (431), a third driven gear (432) and a third driving gear (433), the first driving gear and the first driven gear (412) are fixedly installed on the first transmission shaft (411), the second driving gear (423) and the second driven gear (422) are fixedly installed on the second transmission shaft (421), the third driving gear (433) and the third driven gear (432) are fixedly installed on the third transmission shaft (431), the first driven gear (412) is meshed with the input shaft (300) through the tooth spaces (310), the second driven gear (422) is meshed with the first driving gear, the third driven gear (432) is meshed with the second driving gear (423), and the output gear (200) is meshed with the third driving gear (433);
wherein an outer diameter of the first driven gear (412) is greater than an outer diameter of the input shaft (300), an outer diameter of the second driven gear (422) is greater than an outer diameter of the first driving gear, an outer diameter of the third driven gear (432) is greater than an outer diameter of the second driving gear, and an outer diameter of the output gear (200) is greater than an outer diameter of the third driving gear (433); and
wherein a thickness of each of the tooth spaces (310) is greater than a thickness of the first driven gear (412), a thickness of the first driving gear is greater than a thickness of the second driven gear (422), a thickness of the second driving gear is greater than a thickness of the third driven gear (432), and a thickness of the third driving gear (433) is greater than a thickness of the output gear (200).

2. A stepping motor, comprising the transmission mechanism of stepping motor according to claim 1.

3. A driving mechanism, comprising:
the stepping motor according to claim 2; and
a connecting piece connected to the output shaft (100) to transmit the power of the stepping motor.

4. The driving mechanism according to claim 3, wherein the connecting piece is one of a coupling (500), a rotating rod (600), or a gear.

## Patentansprüche

1. Getriebemechanismus eines Schrittmotors, umfassend:
eine Eingangswelle (300);
eine Abgangswelle (100), die mit einer Vielzahl von Nuten (110) versehen ist, wobei die Nuten (110) bogenförmige Nuten (110) sind und die Vielzahl von Nuten (110) gleichmäßig auf einer Umfangsfläche der Abgangswelle (100) verteilt sind;
ein auf der Abgangswelle (100) montiertes Abtriebsrad (200), wobei das Abtriebsrad (200) mit fünf Erhebungen (210) versehen ist, die gleichmäßig entlang einer Umfangsrichtung des Abtriebsrads (200) verteilt sind, und wobei die Erhebungen (210) bogenförmige Erhebungen (210) sind und die Erhebungen (210) mit den jeweiligen Nuten (110) zusammenpassen;
wobei drei Getrieberadsätze vorgesehen sind, die drei Getrieberadsätze entlang einer Umfangsrichtung der Eingangswelle (300) angeordnet sind, die drei Getrieberadsätze jeweils ein erster Getrieberadsatz (410), ein zweiter Getrieberadsatz (420) und ein dritter Getrieberadsatz (430) sind, die nacheinander ineinandergreifen, der erste Getrieberadsatz (410) mit der Eingangswelle (300) verbunden ist und das Abtriebsrad (200) mit dem dritten Getrieberadsatz (430) verbunden ist;
wobei ein Ende der Eingangswelle (300) mit Zahnlücken (310) versehen ist, der erste Getrieberadsatz (410) eine erste Getriebewelle (411), ein erstes angetriebenes Zahnrad (412) und ein erstes antreibendes Zahnrad umfasst, der zweite Getrieberadsatz (420) eine zweite Getriebewelle (421), ein zweites angetriebenes Zahnrad (422) und ein zweites antreibendes Zahnrad (423) umfasst, der dritte Getrieberadsatz (430) eine dritte Getriebewelle (431), ein drittes angetriebenes Zahnrad (432) und ein drittes antreibendes Zahnrad (433) umfasst, das erste antreibende Zahnrad und das erste angetriebene Zahnrad (412) fest auf der ersten Getriebewelle (411) installiert sind, das zweite antreibende Zahnrad (423) und das zweite angetriebene Zahnrad (422) fest auf der zweiten Getriebewelle (421) installiert sind, das dritte antreibende Zahnrad (433) und das dritte angetriebene Zahnrad (432) fest auf der dritten Getriebewelle (431) installiert sind, das erste angetriebene Zahnrad (412) über die Zahnlücken (310) mit der Eingangswelle (300) ineinandergreift, das zweite angetriebene Zahnrad (422) mit dem ersten antreibenden Zahnrad ineinandergreift, das dritte angetriebene Zahnrad (432) mit dem zweiten antreibenden Zahnrad (423) ineinandergreift und das Abtriebsrad (200) mit dem dritten antreibenden Zahnrad (433) ineinandergreift;
wobei ein Außendurchmesser des ersten angetriebenen Zahnrads (412) größer ist als ein Außendurchmesser der Eingangswelle (300), ein Außendurchmesser des zweiten angetriebenen Zahnrads (422) größer ist als ein Außendurchmesser des ersten antreibenden Zahnrads, ein Außendurchmesser des dritten angetriebenen Zahnrads (432) größer ist als ein Außendurchmesser des zweiten antreibenden Zahnrads und ein Außendurchmesser des Abtriebsrads (200) größer ist als ein des Außendurchmesser des dritten antreibenden Zahnrads (433); und
wobei eine Dicke von jeder der Zahnlücken (310) größer ist als eine Dicke des ersten angetriebenen Zahnrads (412), eine Dicke des ersten antreibenden Zahnrads größer ist als eine Dicke des zweiten angetriebenen Zahnrads (422), eine Dicke des zweiten angetriebenen Zahnrads größer ist als eine Dicke des dritten angetriebenen Zahnrads (432) und eine Dicke des dritten angetriebenen Zahnrads (433) größer ist als eine Dicke des Abtriebsrads (200).

2. Schrittmotor, der den Getriebemechanismus eines Schrittmotors gemäß Anspruch 1 umfasst.

3. Antriebsmechanismus, umfassend:
den Schrittmotor gemäß Anspruch 2; und
ein Verbindungsstück, das mit der Abgangswelle (100) verbunden ist, um die Kraft des Schrittmotors zu übertragen.

4. Antriebsmechanismus gemäß Anspruch 3, wobei das Verbindungsstück eine Kupplung (500), eine Drehstange (600) oder ein Zahnrad ist.

## Revendications

1. Mécanisme de transmission d'un moteur pas à pas, comprenant :
un arbre d'entrée (300) ;
un arbre de sortie (100) muni d'une pluralité de rainures (110), dans lequel les rainures (110) sont des rainures en forme d'arc (110) et la pluralité de rainures (110) est répartie uniformément sur une surface circonférentielle de l'arbre de sortie (100) ;
un pignon de sortie (200) monté sur l'arbre de sortie (100), dans lequel le pignon de sortie (200) est muni de cinq bossages (210) répartis uniformément le long d'une direction circonférentielle du pignon de sortie (200), et dans lequel les bossages (210) sont des bossages en forme d'arc (210) et les bossages (210) sont appariés avec les rainures respectives (110)
dans lequel trois ensembles de pignons de transmission sont prévus, les trois ensembles de pignons de transmission sont disposés le long d'une direction circonférentielle de l'arbre d'entrée (300), les trois ensembles de pignons de transmission sont respectivement un premier ensemble de pignons de transmission (410), un deuxième ensemble de pignons de transmission (420) et un troisième ensemble de pignons de transmission (430) qui sont en prise les uns après les autres, le premier ensemble de pignons de transmission (410) est relié à l'arbre d'entrée (300), et le pignon de sortie (200) est relié au troisième ensemble de pignons de transmission (430) ;
dans lequel une extrémité de l'arbre d'entrée (300) est pourvue d'espaces entre les dents (310), le premier ensemble de pignons de transmission (410) comprend un premier arbre de transmission (411), un premier pignon mené (412) et un premier pignon menant, le deuxième ensemble de pignons de transmission (420) comprend un deuxième arbre de transmission (421), un deuxième pignon mené (422) et un deuxième pignon menant (423), le troisième ensemble de pignons de transmission (430) comprend un troisième arbre de transmission (431), un troisième pignon mené (432) et un troisième pignon menant (433), le premier pignon menant et le premier pignon mené (412) sont montés de manière fixe sur le premier arbre de transmission (411), le deuxième pignon menant (423) et le deuxième pignon mené (422) sont montés de manière fixe sur le deuxième arbre de transmission (421), le troisième pignon menant (433) et le troisième pignon mené (432) sont montés de manière fixe sur le troisième arbre de transmission (431), le premier pignon mené (412) est en prise avec l'arbre d'entrée (300) par l'intermédiaire des espaces entre les dents (310), le deuxième pignon mené (422) est en prise avec le premier pignon menant, le troisième pignon mené (432) est en prise avec le deuxième pignon menant (423), et le pignon de sortie (200) est en prise avec le troisième pignon menant (433) ;
dans lequel le diamètre extérieur du premier pignon mené (412) est supérieur au diamètre extérieur de l'arbre d'entrée (300), le diamètre extérieur du deuxième pignon mené (422) est supérieur au diamètre extérieur du premier pignon menant, le diamètre extérieur du troisième pignon mené (432) est supérieur au diamètre extérieur du deuxième pignon menant, et le diamètre extérieur du pignon de sortie (200) est supérieur au diamètre extérieur du troisième pignon menant (433) ; et
dans lequel une épaisseur de chacun des espaces entre dents (310) est supérieure à une épaisseur du premier pignon mené (412), une épaisseur du premier pignon menant est supérieure à une épaisseur du deuxième pignon mené (422), une épaisseur du deuxième pignon menant est supérieure à une épaisseur du troisième pignon mené (432), et une épaisseur du troisième pignon menant (433) est supérieure à une épaisseur du pignon de sortie (200).

2. Moteur pas à pas, comprenant le mécanisme de transmission du moteur pas à pas selon la revendication 1.

3. Mécanisme d'entraînement, comprenant :
le moteur pas à pas selon la revendication 2 ; et
une pièce de liaison reliée à l'arbre de sortie (100) pour transmettre la puissance du moteur pas à pas.

4. Mécanisme d'entraînement selon la revendication 3, dans lequel la pièce de liaison est un accouplement (500), une tige rotative (600) ou un pignon.
